# EUROPEAN PATENT APPLICATION

(11) **EP 4 451 458 A1**
(43) Date of publication of application: **23.10.2024**
(21) Application number: 22952529.0
(22) Date of filing: 29.07.2022
(51) Int. Cl.: H01M 50/593

(54) **BATTERY AND ELECTRIC DEVICE**

(71) Applicant: Contemporary Amperex Technology (Hong Kong) Limited, Central, Central And Western District (HK)
(72) Inventor: LI, Lingyu, Ningde, Fujian 352100 (CN)
(74) Representative: Ran, Handong
(86) International application number: PCT/CN2022/109150
(87) International publication number: WO 2024/021082

(57) **Abstract**

The present application relates to the technical field of batteries, and relate to a battery and an electric device. The battery comprises: a plurality of battery cells, wherein the plurality of battery cells are stacked in a first direction, each battery cell comprises a housing and an electrode lead-out member, the housing comprises a first wall, the electrode lead-out member is disposed on the first wall, the electrode lead-out member is used for leading out electric energy of the battery cell, and the first direction is parallel to the thickness direction of the first wall; a convergence component, wherein the convergence component connects the electrode lead-out members of two battery cells; and a first insulating member, wherein a part of the first insulating member is disposed between the first wall and the convergence component so as to insulate and isolate the first wall from the convergence component. The battery has higher safety.

## Description

### Technical Field

The present application relates to the technical field of batteries, and particularly to a battery and a power consuming device.

### Background Art

Achieving energy conservation and emission reduction is the key to the sustainable development of the automotive industry. Electric vehicles have become an important part of the sustainable development of the automotive industry due to their advantages in energy conservation and environmental protection. For the electric vehicles, the battery technology is an important factor to their development.

During the manufacture of batteries, the safety of batteries is a non-negligible issue. Therefore, how to improve the safety of batteries is an urgent technical problem to be solved in the battery technology.

### Summary of the Invention

An object of the present application is to provide a battery and a power consuming device. The battery has a high level of safety.

The present application is implemented through technical solutions as follows.

In a first aspect, the present application provides a battery, comprising: a plurality of battery cells, the plurality of battery cells being stacked in a first direction, wherein the battery cell comprises a shell and an electrode lead-out member, the shell comprises a first wall, the electrode lead-out member is provided on the first wall, the electrode lead-out member is configured to lead out electric energy of the battery cell, and the first direction is parallel to a thickness direction of the first wall; a busbar component, the busbar component connecting the electrode lead-out members of two of the battery cells; and a first insulating member, at least part of the first insulating member being provided between the first wall and the busbar component to insulate and isolate the first wall from the busbar component.

According to the embodiments of the present application, by arranging at least part of the first insulating member of the battery between the first wall and the busbar component, it is possible to achieve insulation and isolation between the first wall and the busbar component, reduce the risk of short circuit, and enable the battery to have a high level of safety.

According to some embodiments of the present application, the busbar component comprises a bottom wall and two side walls, wherein the two side walls are disposed opposite each other in the first direction, the bottom wall connects the two side walls, the bottom wall is located on one side of the electrode lead-out member in a second direction, and the second direction is perpendicular to the first direction.

In the foregoing solution, the two side walls correspond to the two battery cells so as to facilitate the electrical connection between the electrode lead-out members of the two battery cells and facilitate assembly.

According to some embodiments of the present application, the first insulating member comprises a first portion, and the first portion is located between the side wall and the first wall in the first direction.

In the foregoing solution, by positioning the first portion between the side wall and the first wall, an insulating isolation between the first wall and the side wall is achieved.

According to some embodiments of the present application, the shell comprises a housing and an end cap, wherein the housing has an opening, the end cap covers the opening, the end cap is connected to the housing by a connecting portion, and the first wall is the end cap.

In the foregoing solution, the first wall is the end cap, and the electrode lead-out member is provided on the end cap to facilitate assembly of the battery cell.

According to some embodiments of the present application, there is a first gap between the first portion and the first wall in the first direction.

In the foregoing solution, the first gap is between the first portion and the connecting portion, and the first gap can avoid the connecting portion and reduce the influence of the first portion on the connection of the end cap and the housing.

According to some embodiments of the present application, the connecting portion is a weld mark, and a size of the first gap in the first direction is H, where 0.5 mm ≤ H ≤ 5 mm, and preferably, 0.6 mm ≤ H ≤ 1 mm.

In the foregoing solution, in the first direction, the size H of the first gap satisfies the above-mentioned relationship, which can reduce the risk of melting and deformation of the first portion due to high temperature during welding, and also occupy a small assembly space. Compared to the case where 0.5 mm ≤ H ≤ 5 mm, when 0.6 mm ≤ H ≤ 1 mm, on the one hand, there is a larger gap between the first portion and the connecting portion, reducing the risk that the high temperature during welding causes the first portion to melt and deform, and on the other hand, the first portion occupies a smaller assembly space in the first direction in a case where a good insulating effect is provided between the busbar component and the shell.

According to some embodiments of the present application, the connecting portion is a weld mark, the first portion comprises a first end, and the first end extends beyond the weld mark in the second direction away from the bottom wall.

In the foregoing solution, the first end extends beyond the weld mark in the direction away from the bottom wall in the second direction, so as to facilitate a connection between the first end and a connecting component (such as other insulating structure), facilitate the fixation of the first portion, and at the same time, provide a good insulating effect between the busbar component and the first wall. When there is the first gap between the first portion and the first wall in the first direction, the risk that the high temperature during welding causes the first portion to melt and deform can be reduced, and the heat dissipation effect of welding can also be improved.

According to some embodiments of the present application, the first end extends beyond the weld mark by a size of C2, where 0.5 mm ≤ C2 ≤ 5 mm, and preferably, 2 mm ≤ C2 ≤ 4 mm.

In the foregoing solution, when the first end is connected to the connecting component (such as other insulating structure), the size of the first end extending beyond the weld mark satisfies the above-mentioned range, which can reduce the risk of melting and deformation of the connection between the first portion and the connecting component due to high temperature during welding, and can also improve the heat dissipation effect of welding. Compared to the case where 0.5 mm ≤ C2 ≤ 5 mm, when 2 mm ≤ C2 ≤ 4 mm, the first end exceeds beyond the weld mark by a certain size, so that the risk that the high temperature during welding causes the connection between the first portion and the connecting component to melt and deform is effectively reduced, the heat dissipation effect of the welding can be improved, and at the same time, the assembly space occupied in the second direction is relatively small.

According to some embodiments of the present application, the first portion extends beyond an edge of the first wall in the second direction.

In the foregoing solution, in the second direction, the first portion extends beyond the edge of the first wall, so that the first portion forms a large insulating area between the first wall and the busbar component, thus having a good insulating effect.

According to some embodiments of the present application, the housing is formed with a first flanged portion at an edge of the opening, and the first flanged portion and the end cap are welded to form the connecting portion.

In the foregoing solution, the end cap is connected to the first flanged portion, which does not occupy the internal space of the battery cell, resulting in a high energy density of the battery cell.

According to some embodiments of the present application, the first insulating member further comprises a second portion, the second portion is connected to the first portion, and the second portion is located between the bottom wall and the first wall in the second direction.

In the case where the housing has the first flanged portion, the first flanged portion and the end cap are easily contact the bottom wall in the second direction to form an electrical connection. In this solution, in the second direction, the second portion is located between the bottom wall and the first wall, thereby increasing the insulating effect between the bottom wall and the first wall.

According to some embodiments of the present application, there is a second gap between the second portion and the first wall in the second direction.

In the foregoing solution, the second gap is between the second portion and the first wall, which increases a creepage distance between the bottom wall and the first wall to increase the insulating effect.

According to some embodiments of the present application, a size of the second gap in the second direction is C1, where 0.5 mm ≤ C1 ≤ 5 mm, and preferably, 1 mm ≤ C1 ≤ 2 mm.

In the foregoing solution, the size C1 of the second gap satisfies the above-mentioned range, which has a good insulating effect and occupies a smaller assembly space. Compared to the case where 0.5 mm ≤ C1 ≤ 5 mm, when 1 mm ≤ C1 ≤ 2 mm, there is a certain creepage distance between the first wall and the bottom wall, which has a good insulating effect and occupies a small assembly space in the second direction.

According to some embodiments of the present application, in a direction in which the first portion faces the first flanged portion, the second portion extends beyond the first flanged portion.

In the foregoing solution, the second portion extends beyond the first flanged portion so that the second portion has a good insulating effect on the bottom wall and the shell.

According to some embodiments of the present application, the battery cell further comprises a second insulating member, and the second insulating member is provided between the electrode lead-out member and the first wall to insulate and isolate the electrode lead-out member from the first wall.

In the foregoing solution, the second insulating member is provided so that the electrode lead-out member is insulated and isolated from the first wall.

According to some embodiments of the present application, the first insulating member is connected to the second insulating member.

In the foregoing solution, the first insulating member is connected to the second insulating member to facilitate the fixation of the first insulating member.

According to some embodiments of the present application, the first insulating member and the second insulating member are integrally formed.

In the foregoing solution, the first insulating member and the second insulating member are integrally formed to facilitate processing and assembly.

According to some embodiments of the present application, the electrode lead-out member comprises a first surface, a plane where the first surface is located intersects with the first wall, and the busbar component is connected to the first surface.

In the foregoing solution, the plane where the first surface is located intersects with the first wall, and the busbar component is connected to the first surface so as to facilitate welding between the busbar component and the electrode lead-out member, thereby improving the assembly efficiency of the battery.

According to some embodiments of the present application, the battery cell further comprises an electrode assembly, the electrode assembly is accommodated within the shell, and the electrode assembly has a tab; and the electrode lead-out member comprises a first section, a second section, a third section and a fourth section, wherein the first section is electrically connected to the tab, the second section extends from the first section in a direction away from the first wall, the third section connects the second section and the fourth section at an end of the second section away from the first wall, the fourth section extends from the third section in a direction close to the first wall, and the first surface is a surface of the fourth section facing away from the second section.

In the foregoing solution, the fourth section and the second section are connected by the third section, the electrode lead-out member is capable of being deformed when the battery cell expands, so that a distance between the fourth section and the second section may be changed to absorb the expansion stress generated when the battery cell expands.

According to some embodiments of the present application, the second insulating member comprises a body and a protruding portion, wherein the body is provided between the first wall and the first section, the protruding portion protrudes from the body in the first direction, and the protruding portion is inserted between the second section and the fourth section.

In the foregoing solution, the protruding portion is inserted between the second section and the fourth section, and the protruding portion is capable of supporting the fourth section when the busbar component is connected to the fourth section, thereby facilitating the connection between the electrode lead-out member and the bus member.

According to some embodiments of the present application, the first portion is connected to the protruding portion, and a part of the first portion is located between the fourth section and the first wall, wherein the first portion, the protruding portion and the body are arranged in a second direction, and the second direction is perpendicular to the first direction.

In the foregoing solution, the first portion is connected to the protruding portion and a part of the first portion is located between the fourth section and the first wall, so that the fourth section and the first wall can be insulated and isolated from each other, and the fixation of the first insulating member by the second insulating member is facilitated.

According to some embodiments of the present application, the battery further comprises two third insulating members, and the two third insulating members are connected to two ends of the first portion in a third direction, wherein the third direction, the second direction and the first direction are perpendicular to each other, the third insulating member extends from the first portion in the first direction away from the first wall, the first portion and the two third insulating members define an accommodation space, and at least a part of the side wall is located within the accommodation space.

In the foregoing solution, the two third insulating members are connected to two ends of the first portion in the third direction, and the insulating effect on the busbar component is increased in the third direction Z.

According to some embodiments of the present application, the battery cell further comprises an electrode terminal, the first wall is provided with an electrode lead-out hole, the electrode terminal passes through the electrode lead-out hole, the electrode lead-out member is provided outside the first wall, and the first section and the tab are electrically connected through the electrode terminal.

In the foregoing solution, the electrode terminal is positioned by passing the electrode terminal through the electrode lead-out hole, so as to facilitate the connection of the electrode terminal with the electrode lead-out member and the tab.

According to some embodiments of the present application, the busbar component further comprises two second flanged portions, each of which extends from an end of the corresponding side wall away from the bottom wall in a direction away from the other side wall, and the two second flanged portions are respectively connected to the electrode lead-out members of two of the battery cells.

In the foregoing solution, two second flanged portions are provided to facilitate the connection of the busbar component with the electrode lead-out members of the two battery cells, resulting in a compact structure of the internal components of the battery.

According to some embodiments of the present application, the shell has a plurality of walls, and among the plurality of walls, the first wall is a wall with a largest projected area in the thickness direction thereof.

In the foregoing solution, the first wall is a large surface of the shell, which means that the electrode lead-out member is provided on the large surface of the battery cell and is located on a side of the battery cell in a stacking direction thereof. Compared to the traditional structure in which the electrode lead-out member is provided on a narrow surface of the battery cell, the technical solution of the present application effectively ensures the stability of the size and structure of the electrode lead-out member, so as to ensure that the electrode lead-out member can meet the requirement of the current passing capacity of the battery cell.

According to some embodiments of the present application, the shell further comprises a second wall, the second wall and the first wall are disposed opposite each other in the thickness direction of the first wall, the second wall is provided with a recess, and the recess is configured to accommodate the electrode lead-out member of the battery cell adjacent to the second wall.

In the foregoing solution, when the plurality of battery cells are stacked, the recess is provided to accommodate the electrode lead-out member of the battery cell adjacent to the second wall, making reasonable use of the assembly space to ensure that the battery has a high energy density. Meanwhile, the recess is provided to provide certain protection for the electrode lead-out member and the connection region where the electrode lead-out member is connected to the busbar component, such that reduce the risk that the electrode lead-out member bears an uncontrollable external force, thereby effectively improving the structural stability of the electrode lead-out member and the stability of the connection with the busbar component.

In a second aspect, the present application provides a power consuming device, comprising a battery provided by any of the foregoing embodiments, the battery being configured to provide electrical energy.

Some of the additional aspects and advantages of the present application will be set forth in the following description, and some will become apparent from the following description, or be learned by practice of the present application.

### Brief Description of the Drawings

In order to more clearly illustrate the technical solutions of the embodiments of the present application, the accompanying drawings required in the embodiments of the present application will be briefly described below. Obviously, the accompanying drawings described below are merely some embodiments of the present application, and for those of ordinary skill in the art, other accompanying drawings can be obtained from these accompanying drawings without making creative efforts.
FIG. 1 is a schematic diagram of a vehicle according to some embodiments of the present application;
FIG. 2 is an exploded view of a battery according to some embodiments of the present application;
FIG. 3 is an exploded view of a battery cell according to some embodiments of the present application;
FIG. 4 is an assembly diagram of a busbar component and a battery cell according to some embodiments of the present application;
FIG. 5 is a partially enlarged view of part A in FIG. 4;
FIG. 6 is a schematic assembly diagram of a busbar component and an electrode lead-out member according to some embodiments of the present application;
FIG. 7 is a schematic assembly diagram of a busbar component and an electrode lead-out member according to some other embodiments of the present application;
FIG. 8 is a schematic assembly diagram of a battery cell and a busbar component according to some embodiments of the present application;
FIG. 9 is a partially enlarged view of part B in FIG. 8;
FIG. 10 is a schematic assembly diagram of a busbar component and an electrode lead-out member according to some yet other embodiments of the present application;
FIG. 11 is a schematic assembly diagram of a first insulating member, a second insulating member and a third insulating member according to some embodiments of the present application; and
FIG. 12 is a schematic diagram of a busbar component according to some embodiments of the present application.

In the accompanying drawings, the figures are not drawn to scale.

List of reference numerals: 100 - Battery; 10 - Enclosure; 11 - First sub-enclosure; 12 - Second sub-enclosure; 20 - Battery cell; 21 - Shell; 211 - Housing; 2111 - First flanged portion; 212 - End cap; 213 - First wall; 2131- Electrode lead-out hole; 214 - Second wall; 2141 - Recess; 22 - Electrode assembly; 221 - Tab; 23 - Electrode lead-out member; 231 - First section; 232 - Second section; 233 - Third section; 234 - Fourth section; 235 - First surface; 24 - Electrode terminal; 25 - Second insulating member; 251 - Body; 252 - Protruding portion; 26 - Adapter; 27 - Fourth insulating member; 30 - Busbar component; 31 - Bottom wall; 32 - Side wall; 33 - Second flanged portion; 40 - First insulating member; 41 - First portion; 411 - First end; 412 - Second end; 42 - Second portion; 50 - Third insulating member; Q1 - First gap; Q2 - Second gap; P - Weld mark; 200 - Controller; 300 - Motor; 1000 - Vehicle; X - First direction; Y - Second direction; Z - Third direction.

### Detailed Description of Embodiments

The implementations of the present application will be further described in detail below in conjunction with the accompanying drawings and embodiments. The following detailed description of the embodiments and the accompanying drawings are used to illustrate the principle of the present application by way of example and are not intended to limit the scope of the present application. That is, the present application is not limited to the described embodiments.

Unless otherwise defined, all technical and scientific terms used in the present application have the same meanings as those commonly understood by those skilled in the art to which the present application belongs. The terms used in the description of the present application are merely for the purpose of describing specific embodiments, but are not intended to limit the present application. The terms "comprising" and "having" and any variations thereof in the description and the claims of the present application as well as the brief description of the accompanying drawings described above are intended to cover non-exclusive inclusion. The terms "first", "second", etc. in the description and the claims of the present application as well as the foregoing accompanying drawings are used to distinguish between different objects, rather than describing a specific order or a primary-secondary relationship.

In the present application, the phrase "embodiment" mentioned means that the specific features, structures and characteristics described in conjunction with the embodiments may be included in at least one embodiment of the present application. The phrase at various locations in the description does not necessarily refer to the same embodiment, or an independent or alternative embodiment exclusive of another embodiment. Those skilled in the art should understand, in explicit and implicit manners, that an embodiment described in the present application can be combined with another embodiment.

In the description of the present application, it should be noted that, the terms "mount", "connected", "connect", or "attach" should be interpreted in a broad sense unless explicitly defined and limited otherwise. For example, they may be a fixed connection, a detachable connection, or an integral connection; or may be a direct connection, an indirect connection by means of an intermediate medium, or internal communication between two elements. For those of ordinary skill in the art, the specific meanings of the foregoing terms in the present application may be understood according to specific circumstances.

The term "and/or" in the present application is merely a description of the associated relationship of associated objects, representing that three relationships may exist, for example, A and/or B, may be expressed as: only A exists, both A and B exist, and only B exists. In addition, the character "/" in the present application generally indicates that the associated objects before and after the character are in a relationship of "or".

In the present application, "a plurality of" means two or more (including two), similarly, "a plurality of groups" means two or more groups (including two groups), and "a plurality of pieces" means two or more pieces (including two pieces).

In the present application, a battery cell may include a lithium ion secondary battery, a lithium ion primary battery, a lithium-sulfur battery, a sodium-lithium ion battery, a sodium ion battery or a magnesium ion battery, etc., which is not limited in the embodiments of the present application. The battery cell may be flat, cuboid, or in other shapes, which is also not limited in embodiments of the present application.

A battery mentioned in the present application refers to a single physical module comprising one or more battery cells to provide a higher voltage and capacity. For example, the battery mentioned in the present application may include a battery module, etc.

The battery further comprises a busbar component. The busbar component is used for an electric connection between a plurality of battery cells to achieve series connection, parallel connection, or parallel-series connection of the plurality of battery cells. The parallel-series connection means that some of the plurality of battery cells are connected in series and some are connected in parallel.

The battery cell includes an electrode assembly and an electrolyte. The electrode assembly is composed of a positive electrode plate, a negative electrode plate and a separator. The battery cell works primarily by moving metal ions between the positive electrode plate and the negative electrode plate. The positive electrode plate includes a positive electrode current collector and a positive electrode active material layer. A surface of the positive electrode current collector is coated with the positive electrode active material layer, the positive electrode current collector not coated with the positive electrode active material layer protrudes from the positive electrode current collector coated with the positive electrode active material layer, and the positive electrode current collector not coated with the positive electrode active material layer serves as a positive electrode tab. Taking a lithium ion battery as an example, the positive electrode current collector may be made of aluminum, and the positive electrode active material may be lithium cobalt oxide, lithium iron phosphate, ternary lithium, lithium manganate, etc. The negative electrode plate includes a negative electrode current collector and a negative electrode active material layer. A surface of the negative electrode current collector is coated with the negative electrode active material layer, the negative electrode current collector not coated with the negative electrode active material layer protrudes from the negative electrode current collector coated with the negative electrode active material layer, and the negative electrode current collector not coated with the negative electrode active material layer serves as a negative electrode tab. The negative electrode current collector may be made of copper, and the negative electrode active material may be carbon, silicon, etc. In order to ensure that no fusing occurs when a large current passes, a plurality of positive electrode tabs are provided and are stacked together, and a plurality of negative electrode tabs are provided and are stacked together. The separator may be made of polypropylene (PP), or polyethylene (PE), etc. In addition, the electrode assembly may be of a wound structure or a laminated structure, which will not be limited in the embodiments of the present application.

The battery cell further comprises a shell, an electrode terminal and an electrode lead-out member. The shell comprises a housing and an end cap. The housing has an opening, the end cap closes the opening, and the electrode assembly is provided within the housing. The electrode terminal passes through the end cap. A tab of the electrode assembly is connected to one end of the electrode terminal, and the electrode lead-out member is connected to the other end of the electrode terminal. The electrode lead-out member is configured to lead out electric energy of the battery cell. The electrode lead-out member is provided with a through-hole through which the electrode terminal is passed. The electrode terminal passes through the through-hole and is riveted to the electrode lead-out member.

Design factors on many aspects need to be simultaneously considered for the development of the battery technology, such as energy density, discharge capacity, charge-discharge rate, and other performance parameters. In addition, the safety of the battery needs to be taken into account.

In the prior art, during producing batteries, a plurality of battery cells are stacked, and electrode lead-out members of the plurality of battery cells are connected through a busbar component. One end of the busbar component is connected to the electrode lead-out member of one battery cell, and the other end of the busbar component bypasses a wall of a shell of the battery cell provided with the electrode lead-out member and is connected to the electrode lead-out member of another battery cell. The inventor found that in batteries with such structure, the busbar component is prone to forming short circuit with the shell, which affects the safety of the battery.

In view of the above, in order to solve the insulation problem between the busbar component and the shell, the inventor, after thorough research, has designed a battery in which an insulating structure is provided between the busbar component and the wall of the shell provided with the electrode lead-out member so as to insulate and isolate the wall from the busbar component, reduce the risk of short circuit, and enable the battery to have a high level of safety.

The battery cell disclosed in the embodiments of the present application may be used in, but not limited to, a power consuming device, such as a vehicle, a ship, or an aircraft. A power supply system of the power consuming device may be composed of a battery and the like disclosed in the present application.

The embodiments of the present application provide a power consuming device using a battery as a power supply. The power consuming device may be, but not limited to, a cell phone, a tablet, a laptop, an electric toy, an electric tool, an electric bicycle, an electric motorcycle, an electric vehicle, a ship, a spacecraft, etc. The electric toy may include a stationary or mobile electric toy, such as a game console, an electric vehicle toy, an electric ship toy, and an electric airplane toy. The spacecraft may include an airplane, a rocket, a space shuttle, a spaceship, etc.

For ease of description of the embodiments below, an example in which a power consuming device in an embodiment of the present application refers to a vehicle is used for description.

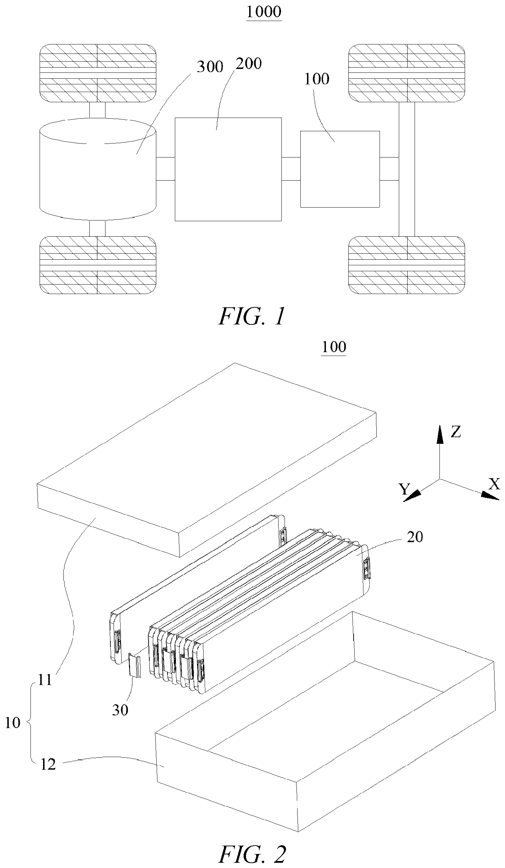

Referring to FIG. 1, FIG. 1 is a schematic diagram of a vehicle according to some embodiments of the present application. The vehicle 1000 may be a fuel vehicle, a gas vehicle, or a new energy vehicle. The new energy vehicle may be a battery electric vehicle, a hybrid electric vehicle, or an extended-range vehicle, etc. A battery 100 is provided inside the vehicle 1000, and the battery 100 may be provided at the bottom, the front or the back of the vehicle 1000. The battery 100 may be configured to supply power to the vehicle 1000. For example, the battery 100 can serve as a power source for operating the vehicle 1000 for use in a circuit system of the vehicle 1000, for example, to meet working power requirements during startup, navigation and running of the vehicle 1000.

The vehicle 1000 may further comprise a controller 200 and a motor 300. The controller 200 is configured to control the battery 100 to supply power to the motor 300, for example, to meet working power requirements during startup, navigation and traveling of the vehicle 1000.

In some embodiments of the present application, the battery 100 can not only serve as a power supply for operating the vehicle 1000, but also serve as a power supply for driving the vehicle 1000, instead of or partially instead of fuel or natural gas, to provide driving power for the vehicle 1000.

Referring to FIG. 2, FIG. 2 is an exploded view of a battery according to some embodiments of the present application. The battery 100 includes an enclosure 10 and a battery cell 20. The battery cell 20 is accommodated in the enclosure 10. The enclosure 10 is configured to provide an accommodation space for the battery cell 20, and the enclosure 10 may have various structures. In some embodiments, the enclosure 10 may comprise a first sub-enclosure 11 and a second sub-enclosure 12, the first sub-enclosure 11 and the second sub-enclosure 12 cover each other, and the first sub-enclosure 11 and the second sub-enclosure 12 jointly define the accommodation space for accommodating the battery cell 20. The second sub-enclosure 12 may be of a hollow structure with one end open, the first sub-enclosure 11 may be of a plate-like structure, and the first sub-enclosure 11 covers the open side of the second sub-enclosure 12, such that the first sub-enclosure 11 and the second sub-enclosure 12 jointly define the accommodation space; and the first sub-enclosure 11 and the second sub-enclosure 12 each may also be of a hollow structure with one side open, and the open side of the first sub-enclosure 11 covers the open side of the second covers 12.

In the battery 100, a plurality of battery cells 20 may be provided. The plurality of battery cells 20 may be in series connection, in parallel connection, or in parallel-series connection. The parallel-series connection means that some of the plurality of battery cells 20 are connected in series and some are connected in parallel. The plurality of battery cells 20 may be directly connected together in series, or in parallel, or in parallel-series, and then a whole body composed of the plurality of battery cells 20 is accommodated within the enclosure 10. Of course, the battery 100 may also be a whole body accommodated in the enclosure 10 that is formed by firstly connecting a plurality of battery cells 20 in series, in parallel or in parallel-series to form a plurality of battery modules, and then connecting the plurality of battery modules in series, in parallel or in parallel-series. The battery 100 may further comprise other structures. For example, the battery 100 may further comprise a busbar component 30 for achieving electrical connections between the plurality of battery cells 20.

The battery cell 20 may be a secondary battery or a primary battery, and the battery cell 20 may also be a lithium-sulfur battery, a sodium-ion battery, or a magnesium-ion battery, but is not limited thereto.

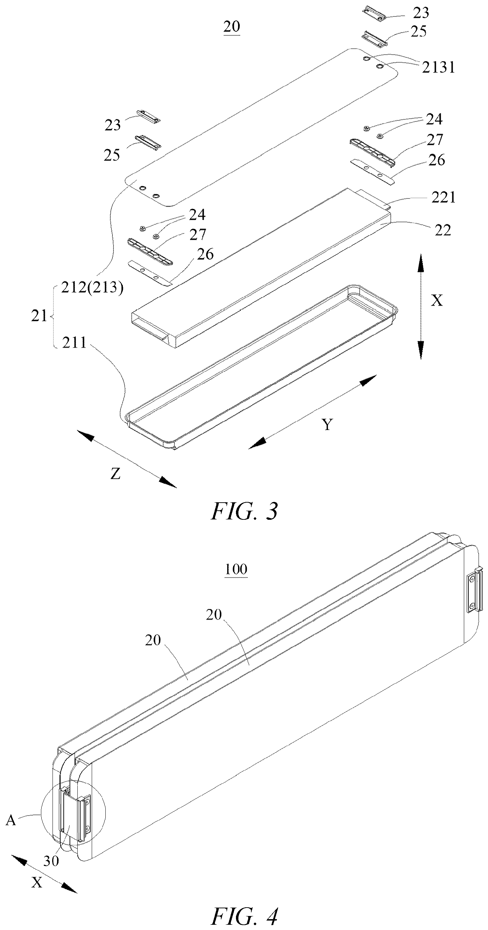

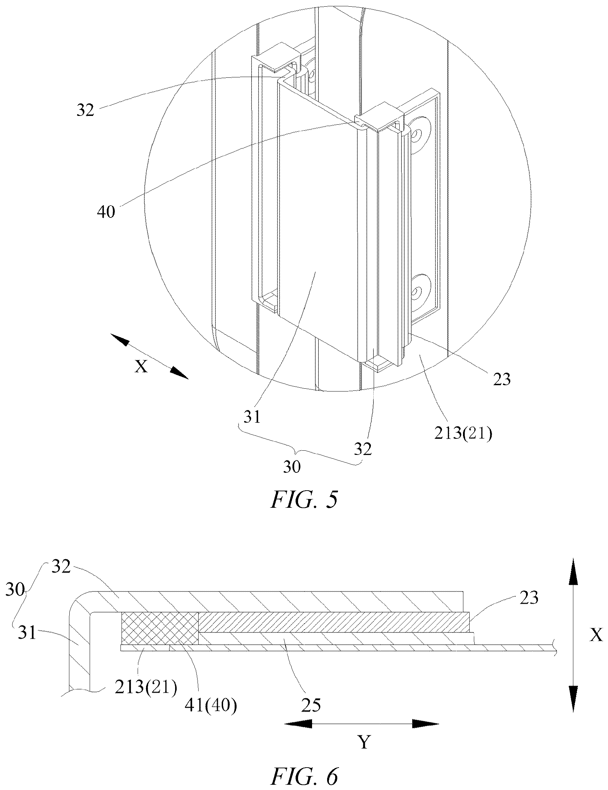

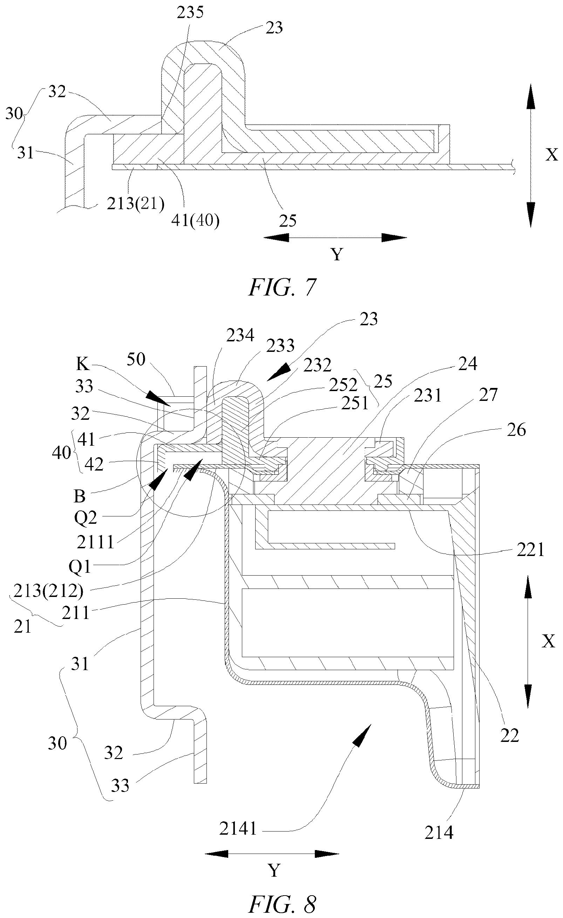

Referring to FIG. 2 and further referring to FIGS. 3 to 7, FIG. 3 is an exploded view of a battery cell according to some embodiments of the present application, FIG. 4 is an assembly diagram of a busbar component and a battery cell according to some embodiments of the present application, Fig. 5 is a partially enlarged view of part A in Fig. 4, FIG. 6 is a schematic assembly diagram of a busbar component and an electrode lead-out member according to some embodiments of the present application, and FIG. 7 is a schematic assembly diagram of a busbar component and an electrode lead-out member according to some other embodiments of the present application. The present application provides a battery 100. The battery 100 comprises a plurality of battery cells 20, a busbar component 30 and a first insulating member 40. The plurality of battery cells 20 are stacked in a first direction X. The battery cell 20 comprises a shell 21 and electrode lead-out members 23. The shell 21 comprises a first wall 213. The electrode lead-out members 23 are provided on the first wall 213, and the electrode lead-out members 23 are configured to lead out electric energy of the battery cell 20. The first direction X is parallel to a thickness direction of the first wall 213. The busbar component 30 connects the electrode lead-out members 23 of two battery cells 20. At least part of the first insulating member 40 is provided between the first wall 213 and the busbar component 30 to insulate and isolate the first wall 213 from the busbar component 30.

In the figure, a direction indicated by a letter X is the first direction.

As shown in FIG. 3, the battery cell 20 further comprises an electrode assembly 22 and an electrode terminal 24. The shell 21 comprises a housing 211 and an end cap 212. The housing 211 has an opening, and the end cap 212 closes the opening to isolate an internal environment of the battery cell 20 from an external environment.

The housing 211 is an assembly that is configured to fit with the end cap 212 so as to create the internal environment of the battery cell 20, wherein the created internal environment may be used for accommodating the electrode assembly 22, an electrolyte and other components. The housing 211 and the end cap 212 may be separate components. The housing 211 may be of various shapes and various sizes. Specifically, the shape of the housing 211 may be determined depending on the specific shape and size of the electrode assembly 22. The housing 211 may be made of various materials, such as copper, iron, aluminum, stainless steel, an aluminum alloy, plastic, etc., which is not particularly limited in the embodiments of the present application. In the embodiments of the present application, an example in which the housing 211 is a rectangular parallelepiped is used for description.

The end cap 212 refers to a component that covers the opening of the shell 211 to isolate the internal environment of the battery cell 20 from the external environment. Without limitation, the end cap 212 may be shaped to adapt to the shape of the shell 211 so as to fit with the shell 211. Optionally, the end cap 212 may be made of a material (for example, aluminum alloy) with certain hardness and strength. In this way, the end cap 212 is less prone to deformation when subjected to compression and collision, so that the battery cells 20 may have a higher structural strength and the safety performance can also be improved. Functional components, such as electrode terminals 24, may be provided on the end cap 212. The electrode terminal 24 may be configured for electrical connection to the electrode assembly 22 for outputting or inputting electric energy of the battery cell 20. The end cap 212 may also be made of various materials, such as copper, iron, aluminum, stainless steel, aluminum alloy, plastic, etc., which is not specially limited in the embodiments of the present application. In some embodiments, an insulating structure (such as a fourth insulating member 27) may also be provided on an inner side of the end cap 212, and the insulating structure may be configured to isolate electrically connected components in the shell 211 from the end cap 212 to reduce the risk of short circuit. As an example, the insulating structure may be made of plastic, rubber, etc.

The electrode assembly 22 is a component where an electrochemical reaction occurs in the battery cell 20. The housing 211 may comprise one or more electrode assemblies 22 therein. The electrode assembly 22 is mainly formed by winding or stacking a positive electrode plate and a negative electrode plate, and a separator is generally arranged between the positive electrode plate and the negative electrode plate. The separator is configured to separate the positive electrode plate and the negative electrode plate to avoid an internal short circuit between the positive electrode plate and the negative electrode plate. The portions of the positive electrode plate and the negative electrode plate that have the active material constitute a main body portion of the cell assembly, and the portions of the positive electrode plate and the negative electrode plate that have no active material each constitute a tab 221. A positive electrode tab and a negative electrode tab may be both located at one end of the main body portion or respectively at two ends of the main body portion. During the charging and discharging of the battery, a positive electrode active material and a negative electrode active material react with the electrolyte, and the tabs 221 are connected to the electrode terminals 24 through adapters 26 to form a current loop.

The first wall 213 is an integral part of the shell 21, and the first wall 213 may be any wall of the shell 21. In embodiments in which the shell 21 comprises the housing 211 and the end cap 212, the first wall 213 may be the end cap 212, or the first wall 213 may also be a wall of the housing 211 other than the end cap 212.

The electrode lead-out member 23 is a component that is configured to lead out the electric power of the battery cell 20. In a broad sense, the electrode lead-out member 23 is configured to output or input the electric power of the battery cell 20.

It will be appreciated that each battery cell 20 may comprise a positive electrode lead-out member and a negative electrode lead-out member. The electrode lead-out member 23 of the embodiments of the present application may be either the positive electrode lead-out member of the battery cell 20 or the negative electrode lead-out member of the battery cell 20.

The busbar component 30 is a component that is capable of implementing electrical connection between the plurality of battery cells 20. The busbar component 30 may also be referred to as a bus-bar wire, a bar, or a bus bar. The busbar component 30 is generally of a sheet-like structure. The busbar component 30 and the electrode lead-out member 23 may be connected by welding, conductive adhesive bonding, etc., to achieve the purpose of the plurality of battery cells 20 being connected in series or in parallel.

It will be appreciated that the busbar component 30 may connect two battery cells 20 disposed adjacent in the first direction X, or may connect any two battery cells 20 disposed at intervals in the first direction X. As an example, the busbar component 30 connects two adjacent battery cells 20 in the first direction X.

At least part of the first insulating member 40 is provided between the first wall 213 and the busbar component 30, which may refer that part of the first insulating member 40 is provided between the first wall 213 and the busbar component 30, or may refer that all of the first insulating member 40 is provided between the first wall 213 and the busbar component 30.

The first insulating member 40 may be provided on the busbar component 30, or the first insulating member 40 may also be provided on the first wall, or the first insulating member 40 may also be connected to other component (such as insulating structure).

According to the embodiments of the present application, by arranging the first insulating member 40 of the battery 100 between the first wall 213 and the busbar component 30, it is possible to achieve an insulating isolation between the first wall 213 and the busbar component 30, reduce the risk of short circuit, and enable the battery 100 to have a high level of safety.

According to some embodiments of the present application, as shown in FIGS. 5 to 7, the busbar component 30 comprises a bottom wall 31 and two side walls 32. The two side walls 32 are disposed opposite each other in a first direction X, and the bottom wall 31 connects the two side walls 32. The bottom wall 31 is located on one side of the electrode lead-out member 23 in a second direction Y, the second direction Y being perpendicular to the first direction X.

In the figure, a direction indicated by a letter Y is the second direction. The second direction Y may be a length direction of the battery cell 20, that is, the busbar component 30 may be located on one side of the length direction of the battery cell 20. In some embodiments, the second direction Y may also be a width direction of the battery cell 20.

The two side walls 32 are disposed opposite each other in the first direction X, the two side walls 32 correspond to the two battery cells 20, and each side wall 32 is electrically connected to the corresponding battery cell 20. For example, the side wall 32 may be electrically connected to the electrode lead-out member 23 of the corresponding battery cell 20, or the side wall 32 may be electrically connected to the electrode lead-out member 23 of the corresponding battery cell 20 through other components.

The bottom wall 31 connects the two side walls 32, which may refer that the bottom wall 31 and the two side walls 32 are integrally formed, or may refer that the bottom wall 31 is welded, riveted or clamped, etc., to the two side walls 32.

In the foregoing solution, the two side walls 32 correspond to the two battery cells 20 so as to facilitate the electrical connection between the electrode lead-out members 23 of the two battery cells 20 and facilitate assembly.

According to some embodiments of the present application, as shown in FIGS. 6 and 7, the first insulating member 40 comprises a first portion 41, and in the first direction X, the first portion 41 is located between the side wall 32 and the first wall 213.

The first portion 41 is located between the side wall 32 and the first wall 213, and an end of the first portion 41 near the bottom wall 31 extends at least to an edge of the first wall 213 to ensure that in the first direction X, the first portion 41 is located within an overlapping region of the first wall 213 and the side wall 32.

By positioning the first portion 41 between the side wall 32 and the first wall 213, an insulating isolation between the first wall 213 and the side wall 32 is achieved, so as to reduce the risk of short circuit contact between the busbar component 30 and the first wall 213.

Referring to FIG. 8, FIG. 8 is a schematic assembly diagram of a battery cell and a busbar component according to some embodiments of the present application. According to some embodiments of the present application, the shell 21 comprises a housing 211 and an end cap 212. The housing 211 has an opening, and the end cap 212 covers the opening. The end cap 212 is connected to the housing 211 by a connecting portion. The first wall 213 is the end cap 212.

The end cap 212 covers the opening and closes the opening, so that a closed space is formed after the end cap 212 is assembled with the housing 211 in order to accommodate the electrode assembly, electrolyte, and other components in the closed space.

The first wall 213 is the end cap 212, that is, the electrode lead-out member 23 is provided on the end cap 212 to facilitate assembly of the battery cell 20.

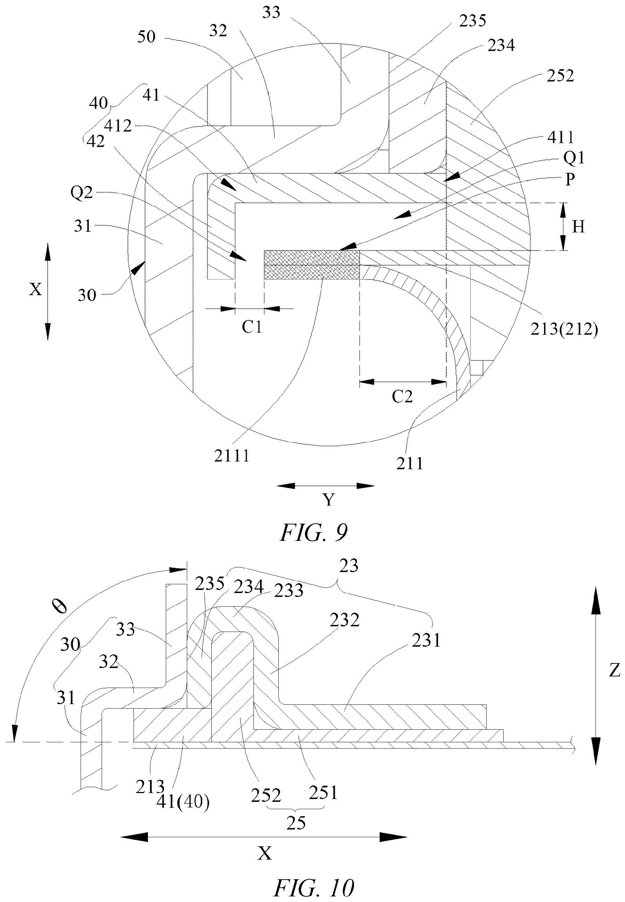

The end cap 212 is connected to the housing 211, that is, the first wall 213 is connected to the housing 211. According to different process requirements, the first wall 213 is connected to the housing 211 in a different manner, and the connection between the first wall 213 and the housing 211 may be a roll seal connection or a welding connection. Referring to FIG. 8 and further referring to FIG. 9, FIG. 9 is a partially enlarged view of part B in FIG. 8. According to some embodiments of the present application, in the first direction X, there is a first gap Q1 between the first portion 41 and the connecting portion.

The first gap Q1 is between the first portion 41 and the connecting portion, that is, at least part of the first portion 41 is not in contact with the connecting portion.

In the foregoing solution, the first gap Q1 is between the first portion 41 and the connecting portion, and the first gap Q1 can avoid the connecting portion and reduce the influence of the first portion 41 on the connection of the end cap 212 (the first wall 213) and the housing 211. When the first wall 213 is in roll seal connection with the housing 211, the first gap Q1 can accommodate the connecting portion formed by the roll seal between the first wall 213 and the housing 211. When the first wall 213 is welded to the housing 211, the first gap Q1 is provided so that the risk that the high temperature during welding causes the first portion 41 to melt and deform can be reduced, and at the same time, the heat dissipation during welding is also facilitated.

According to some embodiments of the present application, as shown in FIG. 9, the connecting portion is a weld mark P, and in the first direction X, a size of the first gap Q1 is H, where 0.5 mm ≤ H ≤ 5 mm, and preferably, 0.6 mm ≤ H ≤ 1 mm.

Optionally, the size H of the first gap Q1 may be 0.5 mm, 0.6 mm, 0.7 mm, 0.8 mm, 0.9 mm, 1 mm, 1.5 mm, 2 mm, 2.5 mm, 3 mm, 3.5 mm, 4 mm, 4.5 mm, or 5 mm, etc.

The weld mark P is an imprint formed after the end cap 212 is welded to the housing 211. The end cap 212 is welded to the housing 211 to form the weld mark P, that is, the first wall 213 is welded to the housing 211 to form the weld mark P.

In the first direction X, the size of the first gap Q1 is H, that is, the size of the first gap Q1 in the first direction X is H.

In the foregoing solution, in the first direction X, the size H of the first gap Q1 satisfies the above-mentioned relationship, which can reduce the risk of melting and deformation of the first portion 41 due to high temperature during welding, and also occupy a small assembly space. When the size H of the first gap Q1 in the first direction X is too small (such as less than 0.5 mm), the distance in the first direction X between the first portion 41 and the connecting portion is relatively close, and the high temperature when the end cap 212 is welded to the housing 211 easily causes the first portion 41 to melt and deform, thereby affecting the insulating effect of the first portion 41. When the size H of the first gap Q1 in the first direction X is excessively large (such as greater than 5 mm), the distance in the first direction X between the first portion 41 and the connecting portion is relatively far, and the first portion 41 occupies a larger assembly space in the first direction X, thereby affecting the energy density of the battery 100.

Compared to the case where 0.5 mm ≤ H ≤ 5 mm, when 0.6 mm ≤ H ≤ 1 mm, on the one hand, there is a larger gap between the first portion 41 and the connecting portion, reducing the risk that the high temperature during welding causes the first portion 41 to melt and deform, and on the other hand, the first portion 41 occupies a smaller assembly space in the first direction X in a case where a good insulating effect is provided between the busbar component 30 and the shell 21.

According to some embodiments of the present application, as shown in FIGS. 8 and 9, the connecting portion is the weld mark P, the first portion 41 comprises a first end 411, and the first end 411 extends beyond the weld mark P in the second direction Y in a direction away from the bottom wall 31.

In the figure, a direction indicated by a letter Y is the second direction. The second direction Y may be a length direction of the battery cell 20, that is, the busbar component 30 may be located on one side of the length direction of the battery cell 20. In some embodiments, the second direction Y may also be a width direction of the battery cell 20.

In an embodiment in which the first wall 213 is the end cap 212, the end cap 212 is welded to the housing 211 to form the weld mark P, that is, the first wall 213 is welded to the housing 211 to form the weld mark P.

As shown in FIG. 9, the first portion 41 further comprises a second end 412, the second end 412 and the first end 411 are opposite ends of the first portion 41 in the second direction Y, and the first end 411 is away from the bottom wall 31 with respect to the second end 412.

The first end 411 extends beyond the weld mark P in the second direction Y away from the bottom wall 31, so as to facilitate a connection between the first end 411 and a connecting component (such as other insulating structure), facilitate the fixation of the first portion, and at the same time, provide a good insulating effect between the busbar component 30 and the first wall 213. When there is the first gap Q1 between the first portion 41 and the first wall 213 in the first direction X, the first end 411 extends beyond the weld mark P in the second direction Y away from the bottom wall 31, which can reduce the risk that the high temperature during welding causes the first portion 41 to melt and deform and can also improve the heat dissipation effect of welding.

According to some embodiments of the present application, as shown in FIG. 9, the first end 411 extends beyond the weld mark P by a size of C2, where 0.5 mm ≤ C2 ≤ 5 mm, and preferably, 2 mm ≤ C2 ≤ 4 mm.

The size of C2 by which the first end 411 extends beyond the weld mark P is the size by which the first end 411 extends beyond the weld mark P in the second direction Y.

Optionally, the size of C2 by which the first end 411 extends beyond the weld mark P may be 0.5 mm, 0.6 mm, 0.7 mm, 0.8 mm, 0.9 mm, 1 mm, 1.5 mm, 2 mm, 2.5 mm, 3 mm, 3.5 mm, 4 mm, 4.5 mm, or 5 mm, etc.

In the foregoing solution, when the first end 411 is connected to the connecting component (such as other insulating structure), the size of the first end 411 extending beyond the weld mark P satisfies the above-mentioned range, which can reduce the risk of melting and deformation of the connection between the first portion 41 and the connecting component due to high temperature during welding, and can also improve the heat dissipation effect of welding. When the size of the first end 411 extending beyond the weld mark P is small (such as less than 0.5 mm), the distance between the end of the first end 411 and the end of the weld mark P is small, so that the high temperature during welding is prone to causing the connection between the first portion 41 and the connecting component to melt and deform, and the heat dissipation effect of welding is poor. When the size of the first end 411 extending beyond the weld mark P is large (such as greater than 5 mm), the size of the first portion 41 in the second direction Y is large, occupying a large assembly space.

Compared to the case where 0.5 mm ≤ C2 ≤ 5 mm, when 2 mm ≤ C2 ≤ 4 mm, the first end 411 extends beyond the weld mark P by a certain size, so that the risk that the high temperature during welding causes the connection between the first portion 41 and the connecting component to melt and deform is effectively reduced, the heat dissipation effect of the welding can be improved, and at the same time, the assembly space occupied in the second direction Y is relatively small.

According to some embodiments of the present application, as shown in FIGS. 8 and 9, in the second direction Y, the first portion 41 extends beyond the edge of the first wall 213.

In an embodiment in which the first portion 41 comprises a first end 411 and a second end 412, the first end 411 and the second end 412 are opposite ends of the first portion 41 in the second direction Y, and the second end 412 is close to the bottom wall 31 with respect to the first end 411.

In the second direction Y, the first portion 41 extends beyond the edge of the first wall 213, that is, the second end 412 extends beyond the edge of the first wall 213.

In the foregoing solution, in the second direction Y, the first portion 41 extends beyond the edge of the first wall 213, so that the first portion 41 forms a large insulating area between the first wall 213 and the busbar component 30, thus having a good insulating effect.

According to some embodiments of the present application, the housing 211 is formed with a first flanged portion 2111 at an edge of the opening, and the first flanged portion 2111 and the end cap 212 are welded to form a connecting portion.

The first flanged portion 2111 extends towards the outside of the housing 211, the end cap 212 covers the opening, and the end cap 212 is connected to the first flanged portion 2111, which does not occupy the internal space of the battery cell 20, resulting in a high energy density of the battery cell 20.

According to some embodiments of the present application, as shown in FIGS. 8 and 9, the first insulating member 40 further comprises a second portion 42, the second portion 42 is connected to the first portion 41, and in the second direction Y, the second portion 42 is located between the bottom wall 31 and the first wall 213.

The second portion 42 and the first portion 41 are integral parts of the first insulating member 40. The second portion 42 is connected to the first portion 41, which may refer that the second portion 42 and the first portion 41 are integrally formed, or may refer that the second portion 42 and the first portion 41 are provided separately and fixed together, for example, the second portion 42 is clamped, bonded or riveted, etc., to the first portion 41. Optionally, the second portion 42 and the first portion 41 are integrally formed for ease of processing.

In the case where the housing 211 has the first flanged portion 2111, the first flanged portion 2111 and the end cap 212 are easily contact the bottom wall 31 in the second direction Y to form an electrical connection. In this solution, in the second direction Y, the second portion 42 is located between the bottom wall 31 and the first wall 213, thereby increasing the insulating effect between the bottom wall 31 and the first wall 213.

According to some embodiments of the present application, as shown in FIGS. 8 and 9, in the second direction Y, there is a second gap Q2 between the second portion 42 and the first wall 213.

In the second direction Y, the second gap Q2 is between the second portion 42 and the first wall 213, that is, the second gap Q2 is between the second portion 42 and the edge of the first wall 213, and the second portion 42 is not in contact with first wall 213.

The second portion 42 is connected to an end of the first portion 41 close to the bottom wall 31, and the second portion 42 may be located at an edge of the first portion 41, so that the bottom wall 31 may be fitted with the second portion 42, thereby reducing an assembly space occupation in the second direction Y.

In the foregoing solution, the second gap Q2 is between the second portion 42 and the first wall 213, which increases a creepage distance between the bottom wall 31 and the first wall 213 to increase the insulating effect. When the end cap 212 is connected to the housing 211 in a roll seal manner to form the connecting portion, the second gap Q2 can avoid the connecting portion. When the end cap 212 is welded to the housing 211 to form the connecting portion, the second gap Q2 is provided so that heat dissipation during welding can be achieved.

According to some embodiments of the present application, as shown in FIG. 9, in the second direction Y, a size of the second gap Q2 is C1, where 0.5 mm ≤ C1 ≤ 5 mm, and preferably, 1 mm ≤ C1 ≤ 2 mm.

Optionally, the size C1 of the second gap Q2 may be 0.5 mm, 0.6 mm, 0.7 mm, 0.8 mm, 0.9 mm, 1 mm, 1.2 mm, 1.5 mm, 2 mm, 2.5 mm, 3 mm, 3.5 mm, 4 mm, 4.5 mm, or 5 mm, etc.

In the foregoing solution, the size C1 of the second gap Q2 satisfies the above-mentioned range, which has a good insulating effect and occupies a smaller assembly space. When the size C1 of the second gap Q2 is too small (such as less than 0.5 mm), a distance between the second portion 42 and the first wall 213 is relatively close, so that the creepage distance between the bottom wall 31 and the first wall 213 is small and the insulating effect is poor. When the size C1 of the second gap Q2 is excessively large (such as greater than 5 mm), the distance between the second portion 42 and the first wall 213 is relatively far, occupying a relatively large assembly space in the second direction Y.

Compared to the case where 0.5 mm ≤ C1 ≤ 5 mm, when 1 mm ≤ C1 ≤ 2 mm, there is a certain creepage distance between the first wall 213 and the bottom wall 31, which has a good insulating effect and occupies a small assembly space in the second direction Y.

According to some embodiments of the present application, as shown in FIGS. 8 and 9, in a direction in which the first portion 41 faces the first flanged portion 2111, the second portion 42 extends beyond the first flanged portion 2111.

In the foregoing solution, the second portion 42 extends beyond the first flanged portion 2111 so that the second portion 42 has a good insulating effect on the bottom wall 31 and the shell 21.

According to some embodiments of the present application, as shown in FIGS. 6 and 7, the battery cell 20 further comprises a second insulating member 25, and the second insulating member 25 is provided between the electrode lead-out member 23 and the first wall 213 to insulate and isolate the electrode lead-out member 23 from the first wall 213.

In the foregoing solution, the second insulating member 25 is provided so that the electrode lead-out member 23 is insulated and isolated from the first wall 213.

According to some embodiments of the present application, the first insulating member 40 is connected to the second insulating member 25.

In the foregoing solution, the first insulating member 40 is connected to the second insulating member 25 to facilitate the fixation of the first insulating member 40.

According to some embodiments of the present application, the first insulating member 40 and the second insulating member 25 are integrally formed.

In the foregoing solution, the first insulating member 40 and the second insulating member 25 are integrally formed to facilitate processing and assembly.

Referring to FIGS. 8 and 9 and further referring to FIG. 10, FIG. 10 is a schematic assembly diagram of a busbar component and an electrode lead-out member according to some yet other embodiments of the present application. According to some embodiments of the present application, as shown in FIG. 8, the electrode lead-out member 23 comprises first surface 235, a plane where the first surface 235 is located intersects with the first wall 213, and the busbar component 30 is connected to the first surface 235.

The first surface 235 is a surface of the electrode lead-out member 23 for connecting with the bus member 30.

The plane where the first surface 235 is located intersects with the first wall 213, which may refer that the plane where the first surface 235 is located is parallel to a thickness direction of the first wall 213, or may refer that the plane where the first surface 235 is located is inclined to the thickness direction of the first wall 213. For example, an angle θ between the plane where the first surface 235 is located and the first wall 213 may be 60°~120°. Preferably, the angle θ between the plane where the first surface 235 is located and the first wall 213 is 85°~95°. Preferably, the plane where the first surface 235 is located may be perpendicular to the first wall 213, that is, the plane where the first surface 235 is located may be parallel to the thickness direction Z of the first wall 213, so as to facilitate the connection between the first surface 235 and the busbar component 30. The first surface 235 may be a surface of the electrode lead-out member 23 closest to the edge of the first wall 213 in the length direction of the battery cell 20.

In the foregoing solution, the plane where the first surface 235 is located intersects with the first wall 213, and the busbar component 30 is connected to the first surface 235 so as to facilitate welding between the busbar component 30 and the electrode lead-out member 23, thereby improving the assembly efficiency of the battery 100.

According to some embodiments of the present application, as shown in FIGS. 8 to 10, the battery cell 20 further comprises an electrode assembly 22, the electrode assembly 22 is accommodated within the shell 21, and the electrode assembly 22 has a tab 221. The electrode lead-out member 23 comprises a first section 231, a second section 232, a third section 233 and a fourth section 234. The first section 231 is electrically connected to the tab 221, the second section 232 extends from the first section 231 in a direction away from the first wall 213, the third section 233 connects the second section 232 and the fourth section 234 at an end of the second section 232 away from the first wall 213, and the fourth section 234 extends from the third section 233 in a direction close to the first wall 213. The first surface 235 is a surface of the fourth section 234 facing away from the second section 232.

The first section 231 is a component of the electrode lead-out member 23 that is configured to connect with the tab 221. The first section 231 may be parallel to the first wall 213, and the first section 231 may also be inclined to the first wall 213.

The electrode lead-out member 23 may be provided on a side of the first wall 213 facing away from the internal of the battery cell 20.

The first section 231 is electrically connected to the tab 221, which may refer that the first section 231 is electrically connected to the tab 221 by conductive component.

The first section 231, the second section 232, the third section 233 and the fourth section 234 may be integrally formed. The second section 232 may be bent relative to the first section 231, the third section 233 may be bent relative to the second section 232, and the fourth section 234 may be bent relative to the third section 233.

The busbar component 30 and the electrode lead-out member 23 may be arranged in the second direction Y, that is, the busbar component 30, the fourth section 234, the third section 233, the second section 232 and the first section 231 may be arranged in the second direction Y.

The fourth section 234 may be parallel to the second section 232, or the fourth section 234 may be inclined to the second section 232.

In order to save the assembly space, the second section 232 may be provided at an end of the first section 231 close to the bottom wall 31 in the second direction Y.

When the electrode lead-out member 23 is integrally formed, since the third section 233 connects the second section 232 and the fourth section 234, the electrode lead-out member 23 is capable of being deformed when the battery cell 20 expands, so that a distance between the fourth section 234 and the second section 232 may be changed to absorb the expansion stress generated when the battery cell 20 expands.

According to some embodiments of the present application, as shown in FIGS. 8 to 10, the second insulating member 25 comprises a body 251 and a protruding portion 252. The body 251 is provided between the first wall 213 and the first section 231, the protruding portion 252 protrudes from the body 251 in the first direction X, and the protruding portion 252 is inserted between the second section 232 and the fourth section 234.

The body 251 and the protruding portion 252 are two integral parts of the second insulating member 25, and the body 251 and the protruding portion 252 may be integrally formed.

The protruding portion 252 protrudes from the body 251 in the first direction X, and the protruding portion 252 protrudes toward a direction of the body 251 facing away from the first wall 213, so that the protruding portion 252 is inserted between the second section 232 and the fourth section 234.

The protruding portion 252 is inserted between the second section 232 and the fourth section 234, and the protruding portion 252 is capable of supporting the fourth section 234 when the busbar component 30 is connected to the fourth section 234, thereby facilitating the connection between the electrode lead-out member 23 and the bus member 30.

According to some embodiments of the present application, as shown in FIGS. 8 to 10, the first portion 41 is connected to the protruding portion 252, and a part of the first portion 41 is located between the fourth section 234 and the first wall 213, the first portion 41, the protruding portion 252 and the body 251 being arranged in the second direction Y, the second direction Y being perpendicular to the first direction X. The first portion 41, the protruding portion 252 and the body 251 are arranged in the second direction Y, that is, the busbar component 30 and the electrode lead-out member 23 are arranged in the second direction Y.

The first portion 41 is connected to the protruding portion 252, and an end of the first portion 41 away from the bottom wall is connected to the protruding portion 252. The end of the first portion 41 away from the bottom wall 31 is also referred as the first end 411 of the first portion 41. A part of the first portion 41 is located between the fourth section 234 and the first wall 213, that is, the first end 411 is located between the fourth section 234 and the first wall 213.

The first portion 41 is connected to the protruding portion 252, which may refer that the first portion 41 and the protruding portion 252 are integrally formed, for example, the first insulating member 40 and the second insulating member 25 are thermoplastic molded, or may refer that the first portion 41 may be clamped, adhered, etc., to the protruding portion 252.

In an embodiment in which the first gap Q1 is between the first portion 41 and the first wall 213, and the end cap 212 (i.e., the first wall 213) is welded to the first flanged portion 2111, the extension of the first end 411 to the projection 252 can reduce the risk that the high temperature during welding causes the first portion 41 to melt and deform, and can also improve the heat dissipation effect of welding.

In the foregoing solution, the first portion 41 is connected to the protruding portion 252 and a part of the first portion 41 is located between the fourth section 234 and the first wall 213, and the first portion 41 is capable of insulating and isolating the fourth section 234 and the first wall 213, facilitating the fixation of the first insulating member 40 by the second insulating member 25.

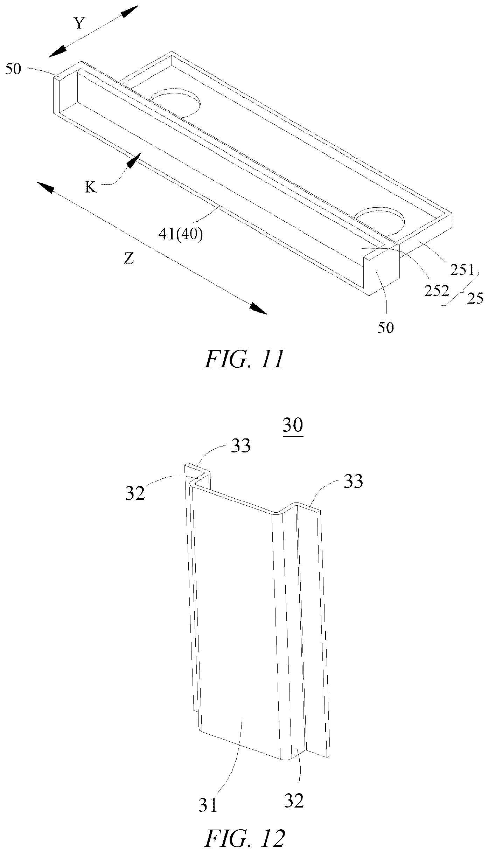

Referring to FIGS. 8 and 9 and further referring to FIG. 11, FIG. 11 is a schematic assembly diagram of a first insulating member, a second insulating member and a third insulating member according to some embodiments of the present application. According to some embodiments of the present application, the battery 100 further comprises two third insulating members 50, and the two third insulating members 50 are connected to two ends of the first portion 41 in a third direction Z, the third direction Z, the second direction Y and the first direction X being perpendicular to each other. The third insulating member 50 extends from the first portion 41 in the first direction X in a direction away from the first wall 213. The first portion 41 and the two third insulating members 50 define an accommodation space K, and at least a part of the side wall 32 is located within the accommodation space K.

In the figure, a direction indicated by a letter Z is the third direction, and the third direction Z may be a width direction of the battery cell 20. In some embodiments, when the second direction Y is the width direction of the battery cell 20, the third direction Z is the length direction of the battery cell 20.

The two third insulating members 50 are connected to two ends of the first portion 41 in the third direction Z, and the two third insulating members 50 and the first portion 41 may be integrally formed for ease of processing.

The first portion 41 and the two third insulating members 50 define the accommodation space K, and at least a part of the side wall 32 is located within the accommodation space K, so that a connection region between the busbar component 30 and the electrode lead-out member 23 is located within the accommodation space K.

In the battery cell 20, which further comprises a second insulating member 25 and the second insulating member 25 comprises a body 251 and a protruding portion 252, the first portion 41, the protruding portion 252, and the two third insulating members 50 define the accommodation space K.

In the foregoing solution, the two third insulating members 50 are connected to two ends of the first portion 41 in the third direction Z, and the insulating effect on the busbar component 30 is increased in the third direction Z.

According to some embodiments of the present application, as shown in FIGS. 3 and 8, the battery cell 20 further comprises an electrode terminal 24, the first wall 213 is provided with an electrode lead-out hole 2131, the electrode terminal 24 passes through the electrode lead-out hole 2131, the electrode lead-out member 23 is provided outside the first wall 213, and the first section 231 and the tab 221 are electrically connected through the electrode terminal 24.

The electrode terminal 24 is a conductive portion, and the electrode terminal 24 may be a cylinder for ease of processing and manufacturing. Optionally, the electrode lead-out hole 2131 may be a circular hole.

In the foregoing solution, the electrode terminal 24 is positioned by passing the electrode terminal 24 through the electrode lead-out hole 2131, so as to facilitate the connection of the electrode terminal 24 with the electrode lead-out member 23 and the tab 221.

According to some embodiments of the present application, as shown in FIGS. 3 and 8, the battery cell 20 further comprises an adapter 26 and a fourth insulating member 27. The adapter 26 is configured to electrically connect the tab 221 with the electrode terminal 24. The fourth insulating member 27 is provided internal of the shell 21, and is configured to insulate and isolate the adapter 26 from the first wall 213.

In the embodiments as described above, the first insulating member 40, the second insulating member 25, the third insulating member 50 and the fourth insulating member 27 may be made of plastic, rubber, etc.

Referring to FIG. 8 and further referring to FIG. 12, FIG. 12 is a schematic diagram of a busbar component according to some embodiments of the present application. According to some embodiments of the present application, the busbar component 30 further comprises two second flanged portions 33, and each second flanged portion 33 extends from an end of the corresponding side wall 32 away from the bottom wall 31 in a direction away from the other side wall 32. The two second flanged portions 33 are respectively connected to the electrode lead-out members 23 of two battery cells 20.

The two second flanged portions 33 are in one-to-one correspondence with the two side walls 32.

The busbar component 30 may be a bent structure, that is, the bottom wall 31, the two side walls 32, and the two second flanged portions 33 are integrally formed, with the side wall 32 bent relative to the bottom wall 31 and the second flanged portion 33 bent relative to the side wall 32.

The plurality of battery cells 20 may comprise a first battery cell and a second battery cell adjacent to each other. The busbar component 30 is configured to connect the electrode lead-out member 23 of the first battery cell and the electrode lead-out member 23 of the second battery cell. The side walls 32 of the busbar component 30 bypassing first battery cell and parallel to the thickness direction of the first wall 213 causes one second flanged portion 33 of the busbar component 30 to be connected to the electrode lead-out member 23 of the first battery cell, and the other second flanged portion 33 of the busbar component 30 to be connected to the electrode lead-out member 23 of the second battery cell.

In the foregoing solution, two second flanged portions 33 are provided to facilitate the connection of the busbar component 30 with the electrode lead-out members 23 of the two battery cells 20, resulting in a compact structure of the internal components of the battery 100.

According to some embodiments of the present application, the shell 21 has a plurality of walls, and among the plurality of walls, the first wall 213 is the wall with the largest projected area in the thickness direction thereof.

Among the plurality of walls, the first wall 213 is the wall with the largest projected area in the thickness direction thereof, which refers that among the projection areas formed by the plurality of walls projecting in their own thickness direction, the wall with the largest projection area is the first wall 213.

Among the plurality of walls of the shell 21, the first wall 213 has the largest projection area in the thickness direction of the first wall 213, that is, the first wall 213 is a large surface of the shell 21, which means that the electrode lead-out member 23 is provided on the large surface of the battery cell 20 and is located on a side of the battery cell 20 in a stacking direction thereof. Compared to the traditional structure in which the electrode lead-out member 23 is provided on a narrow surface of the battery cell 20, the technical solution of the present application effectively ensures the stability of the size and structure of the electrode lead-out member 23, so as to ensure that the electrode lead-out member 23 can meet the requirement of the current passing capacity of the battery cell 20.

According to some embodiments of the present application, as shown in FIG. 8, the shell 21 further comprises a second wall 214. The second wall 214 and the first wall 213 are disposed opposite each other in the thickness direction of the first wall 213. The second wall 214 is provided with a recess 2141, and the recess 2141 is configured to accommodate the electrode lead-out member 23 of the battery cell 20 adjacent to the second wall 214.

The second wall 214 and the first wall 213 are two walls of the shell 21 that are oppositely disposed in the thickness direction of the first wall 213.

The recess 2141 may be provided at an edge of the second wall 214.

In the foregoing solution, when the plurality of battery cells 20 are stacked, the recess 2141 is provided to accommodate the electrode lead-out member 23 of the battery cell 20 adjacent to the second wall 214, making reasonable use of the assembly space to ensure that the battery 100 has a high energy density. Meanwhile, the recess 2141 is provided to provide certain protection for the electrode lead-out member 23 and the connection region where the electrode lead-out member 23 is connected to the busbar component 30, such that reduce the risk that the electrode lead-out member 23 bears an uncontrollable external force, thereby effectively improving the structural stability of the electrode lead-out member 23 and the stability of the connection with the busbar component 30.

In some embodiments, the recess 2141 has a recess depth that is greater than the height at which the electrode lead-out member 23 protrudes from the first wall 213. It will be appreciated that the electrode lead-out member 23 of the battery cell 20 adjacent to the second wall 214 may also be partially accommodated within the recess 2141.

A surface of the second wall 214 may be provided with an insulating layer, so that the second wall 214 is insulated and isolated from the electrode lead-out member 23 of the adjacent battery cell 20 when the plurality of battery cells 20 are stacked. The insulating layer may also be provided on a surface of the electrode lead-out member 23 away from the first wall 213, so that the electrode lead-out member 23 may be insulated and isolated from the second wall 214 of the battery cell 20 adjacent to the first wall 213 when the plurality of battery cells 20 are stacked.

According to some embodiments of the present application, the present application further provides a power consuming device, the power consuming device comprising a battery 100 provided in any of the embodiments as described above, wherein the battery 100 is configured to provide electric energy.

The power consuming device may be any preceding apparatus or system using the battery 100.

According to some embodiments of the present application, referring to FIGS. 2 to 12, the present application provides a battery 100. The battery 100 comprises a plurality of battery cells 20, a busbar component 30 and a first insulating member 40. The plurality of battery cells 20 are stacked in a first direction X. The battery cell 20 comprises a shell 21, and electrode assembly 22, an electrode lead-out member 23, an electrode terminal 24 and a second insulating member 25. The shell 21 comprises a housing 211 and an end cap 212. The housing 211 has an opening, the end cap 212 closes the opening, and the electrode assembly 22 is provided within the housing 211. The end cap 212 is a first wall 213. The housing 211 is provided with a first flanged portion 2111 at an edge of the opening, and the end cap 212 and the first flanged portion 2111 are welded to form a weld mark P. Tabs 221 of the electrode assembly 22 extend from two ends of the battery cell 20 in the length direction. The electrode lead-out member 23 is provided on a side of the first wall 213 facing away from the internal of the battery cell 20. The first wall 213 is provided with an electrode lead-out hole 2131, the electrode terminal 24 passes through the electrode lead-out hole 2131, and one end of the electrode terminal 24 is electrically connected to the tab 221. The electrode lead-out member 23 comprises a first section 231, a second section 232, a third section 233 and a fourth section 234, and the first section 231, the second section 232, the third section 233 and the fourth section 234 are arranged in sequence in a second direction Y. The second section 232 extends from the first section 231 in a direction away from the first wall 213, the third section 233 connects the second section 232 and the fourth section 234 at an end of the second section 232 away from the first section 231, and the fourth section 234 extends from the third section 233 in a direction close to the first wall 213. The fourth section 234 is provided in parallel with the second section 232, and a surface of the fourth section 234 facing away from the second section 232 is a first surface 235. The busbar component 30 comprises a bottom wall 31, two side walls 32 and two second flanged portions 33. The two side walls 32 are disposed opposite in the first direction X, and the bottom wall 31 connects the two side walls 32. Each second flanged portion 33 extends from an end of the corresponding side wall 32 away from the bottom wall 31 in a direction away from the other side wall 32. The two second flanged portions 33 are respectively connected to the first surfaces 235 of the electrode lead-out members 23 of two battery cells 20. The first insulating member 40 comprises a first portion 41 and a second portion 42. The first portion 41 is provided between the busbar component 30 and the first wall 213, and the second portion 42 is provided between the bottom wall 31 and the first wall 213. The second insulating member 25 comprises a body 251 and a protruding portion 252. The body 251 is provided between the first section 231 and the first wall 213, and the protruding portion 252 is inserted between the second section 232 and the fourth section 234. An end of the first portion 41 away from the bottom wall 31 is connected to the protruding portion 252 and is located between the fourth section 234 and the first wall 213. In the first direction X, there is a first gap Q1 between the first portion 41 and the first wall 213. In the second direction Y, there is a second gap Q2 between the second portion 42 and the first wall 213. In the first direction X, an end of the second portion 42 away from the first portion 41 extends beyond the first wall 213.

According to the embodiments of the present application, the battery 100 has a first insulating member 40 provided between the first wall 213 and the busbar component 30, which has a good insulating effect, reduce the risk of short circuit, and enable the battery 100 to have a high level of safety.

Although the present application has been described with reference to the preferred embodiments, various modifications can be made, and equivalents can be provided to substitute for the components thereof without departing from the scope of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A battery, comprising:
a plurality of battery cells, the plurality of battery cells being stacked in a first direction, wherein the battery cell comprises a shell and an electrode lead-out member, the shell comprises a first wall, the electrode lead-out member is provided on the first wall, the electrode lead-out member is configured to lead out electric energy of the battery cell, and the first direction is parallel to a thickness direction of the first wall;
a busbar component, the busbar component connecting the electrode lead-out members of two of the battery cells; and
a first insulating member, at least part of the first insulating member being provided between the first wall and the busbar component to insulate and isolate the first wall from the busbar component.

2. The battery according to claim 1, wherein the busbar component comprises a bottom wall and two side walls, wherein the two side walls are disposed opposite each other in the first direction, the bottom wall connects the two side walls, the bottom wall is located on one side of the electrode lead-out member in a second direction, and the second direction is perpendicular to the first direction.

3. The battery according to claim 2, wherein the first insulating member comprises a first portion, and the first portion is located between the side wall and the first wall in the first direction.

4. The battery according to claim 3, wherein the shell comprises a housing and an end cap, wherein the housing has an opening, the end cap covers the opening, the end cap is connected to the housing by a connecting portion, and the first wall is the end cap.

5. The battery according to claim 4, wherein there is a first gap between the first portion and the first wall in the first direction.

6. The battery according to claim 5, wherein the connecting portion is a weld mark, and a size of the first gap in the first direction is H, where 0.5 mm ≤ H ≤ 5 mm, and preferably, 0.6 mm ≤ H ≤ 1 mm.

7. The battery according to claim 5 or 6, wherein the connecting portion is a weld mark, the first portion comprises a first end, and the first end extends beyond the weld mark in the second direction away from the bottom wall.

8. The battery according to claim 7, wherein the first end extends beyond the weld mark by a size of C2, where 0.5 mm ≤ C2 ≤ 5 mm, and preferably, 2 mm ≤ C2 ≤ 4 mm.

9. The battery according to any one of claims 4-8, wherein the first portion extends beyond an edge of the first wall in the second direction.

10. The battery according to any one of claims 4-9, wherein the housing is formed with a first flanged portion at an edge of the opening, and the first flanged portion and the end cap are welded to form the connecting portion.

11. The battery according to claim 10, wherein the first insulating member further comprises a second portion, the second portion is connected to the first portion, and the second portion is located between the bottom wall and the first wall in the second direction.

12. The battery according to claim 11, wherein there is a second gap between the second portion and the first wall in the second direction.

13. The battery according to claim 12, wherein a size of the second gap in the second direction is C1, where 0.5 mm ≤ C1 ≤ 5 mm, and preferably, 1 mm ≤ C1 ≤ 2 mm.

14. The battery according to any one of claims 11-13, wherein in a direction in which the first portion faces the first flanged portion, the second portion extends beyond the first flanged portion.

15. The battery according to any one of claims 3-14, the battery cell further comprises a second insulating member, and the second insulating member is provided between the electrode lead-out member and the first wall to insulate and isolate the electrode lead-out member from the first wall.

16. The battery according to claim 15, wherein the first insulating member is connected to the second insulating member.

17. The battery according to claim 16, wherein the first insulating member and the second insulating member are integrally formed.

18. The battery according to any one of claims 15-17, wherein the electrode lead-out member comprises a first surface, a plane where the first surface is located intersects with the first wall, and the busbar component is connected to the first surface.

19. The battery according to claim 18, wherein the battery cell further comprises an electrode assembly, the electrode assembly is accommodated within the shell, and the electrode assembly has a tab; and
the electrode lead-out member comprises a first section, a second section, a third section and a fourth section, wherein the first section is electrically connected to the tab, the second section extends from the first section in a direction away from the first wall, the third section connects the second section and the fourth section at an end of the second section away from the first wall, the fourth section extends from the third section in a direction towards the first wall, and the first surface is a surface of the fourth section facing away from the second section.

20. The battery according to claim 19, wherein the second insulating member comprises a body and a protruding portion, wherein the body is provided between the first wall and the first section, the protruding portion protrudes from the body in the first direction, and the protruding portion is inserted between the second section and the fourth section.

21. The battery according to claim 20, wherein the first portion is connected to the protruding portion, and a part of the first portion is located between the fourth section and the first wall, wherein the first portion, the protruding portion and the body are arranged in a second direction, and the second direction is perpendicular to the first direction.

22. The battery according to any one of claims 3-19, wherein the battery further comprises two third insulating members, and the two third insulating members are connected to two ends of the first portion in a third direction, wherein the third direction, the second direction and the first direction are perpendicular to each other, the third insulating member extends from the first portion in the first direction away from the first wall, the first portion and the two third insulating members define an accommodation space, and at least a part of the side wall is located within the accommodation space.

23. The battery according to any one of claims 19-21, wherein the battery cell further comprises an electrode terminal, the first wall is provided with an electrode lead-out hole, the electrode terminal passes through the electrode lead-out hole, the electrode lead-out member is provided outside the first wall, and the first section and the tab are electrically connected through the electrode terminal.

24. The battery according to any one of claims 2-18, wherein the busbar component further comprises two second flanged portions, each of which extends from an end of the corresponding side wall away from the bottom wall in a direction away from the other side wall, and the two second flanged portions are respectively connected to the electrode lead-out members of two of the battery cells.

25. The battery according to any one of claims 1-24, wherein the shell has a plurality of walls, and among the plurality of walls, the first wall is a wall with a largest projected area in the thickness direction thereof.

26. The battery according to any one of claims 1-25, wherein the shell further comprises a second wall, the second wall and the first wall are disposed opposite each other in the thickness direction of the first wall, the second wall is provided with a recess, and the recess is configured to accommodate the electrode lead-out member of the battery cell adjacent to the second wall.

27. A power consuming device, comprising a battery according to any one of claims 1-26, the battery being configured to provide electric energy.
